# EUROPEAN PATENT SPECIFICATION

(11) **EP 3 436 888 B1**
(45) Date of publication and mention of the grant of the patent: **25.05.2022**
(21) Application number: 16854588.7
(22) Date of filing: 26.10.2016
(51) Int. Cl.: G06F 1/16, G06F 3/01, G06F 3/048, G02B 27/01

(54) **HEAD-MOUNTED DISPLAY APPARATUS**
KOPFMONTIERTE ANZEIGEVORRICHTUNG
VISIOCASQUE

(30) Priority: 01.04.2016 CN 201610203076
(43) Date of publication of application: 06.02.2019
(73) Proprietor: BOE Technology Group Co., Ltd., Beijing 100015 (CN)
(72) Inventor: JI, Chunyan, Beijing 100176 (CN)
(74) Representative: Cohausz & Florack
(86) International application number: PCT/CN2016/103332
(87) International publication number: WO 2017/166799

(56) References cited:
- CN-A- 102 421 046
- CN-A- 105 068 248
- CN-A- 105 717 994
- CN-U- 204 790 191
- CN-U- 204 945 491
- CN-U- 205 540 445
- US-A1- 2009 251 661
- US-A1- 2013 237 146
- US-A1- 2014 266 988

## Description

### THECNICAL FIELD

The present disclosure relates generally to the field of wearable technologies, and more specifically to a head-mounted display apparatus.

### BACKGROUND

Due to the interference of real-time images in the external environment, users of existing devices such as augmented reality smart glasses cannot fully enjoy the images provided by the devices without disturbance. Immersive devices provide a solution to this problem. The users having immersive devices can concentrate on viewing the images, however they cannot observe external images (i.e. images in the external environment), and current immersive devices are typically heavy.

Although these above devices can display and output images and audios, other senses of the users, such as the sense of touch and sense of smell, are not brought into play. As such, a smart device that enables a user to observe external images while viewing the images and enables the user to sense the images through a multitude of senses is needed.

US patent application US 2013/237146 A1 discloses an adjustable headset includes an adjustable support band, an adjustable screen, a first and second ear cover, a computer system, a communications system, and a power source. The adjustable support band connects to each ear cover, allowing the virtual goggles to rest atop a user's head, with the ear covers being adjacent to a user's ears. The screen is attached to the ear covers by adjustable screen bars, which allow a user to change the distance, angle, and general orientation of the screen. An exterior cameras would then allow a user to see video footage from their front and backsides, outputting footage to the display. The front exterior camera could allow a user to continue using the present invention while mobile, navigating obstacles by viewing the feed from the front exterior camera.

US patent application US 2009/251661 A1 discloses an eyeglasses including at least one video display that may be pivoted forwardly and outwardly to a viewing position in front of the lenses of the eyeglasses, and folded rearwardly and inwardly to a stored position for retention by the ear pieces of the eyeglasses when not in use are described. When the at least one video display is disposed in the rearward, folded configuration against or within receiving portions of the temple members of the eyeglasses, the eyeglasses present the appearance and function of conventional eyewear.

Chinese patent application CN 102 421 046 A discloses a visible type headphone, comprising earphones, wherein the earphones comprise receivers and a connecting belt, each receiver is an arc-shaped cover body with a groove formed on the surface, the connecting belt is of an arc-shaped structure, two ends of the connecting belts are respectively and movably connected onto the receivers, regulating buttons are arranged in the centers of the outer sides of the receivers The visible type headphone disclosed by the invention is novel in structure and reasonable in design, and can be used for playing music and videos at the same time, the distances between the screens and the eyes can be adjusted. Patent Literature US20140266988 A1 discloses a pair of eyeglasses has a frame and lenses mounted on the frame. A computer processor is mounted on eyeglasses together with a plurality of cameras and a digital projection system. IR sensors and/or dual zoom cameras may also be mounted on the glasses and configured to track the movement of the user's hand.

### SUMMARY

The main purpose of the present disclosure is to provide a technical solution that enables a user wearing a head-mounted display apparatus to monitor external images from an environment while viewing the images, and to bring a multitude of senses of the user into play to thereby enhance the user experience.

A head-mounted display apparatus is disclosed herein, according to claim 1. Further optional embodiments are disclosed by dependent claims 2-13.

Herein an inner side of the earcup refers to a side of the head-mounted display apparatus that is in contact with ears of a user wearing the apparatus, and an outer side of an earcup refers to a side opposing to the inner side of the earcup.

Compared with existing technologies, the head-mounted display apparatus disclosed in the present disclosure enables a user to view external images from an environment simultaneously while enjoying the images and the audios without moving the apparatus away from the eye region. Additionally, multiple sensing devices are incorporated into the apparatus, allowing audio waves, smells, and vibrations to be sensed, thereby providing more real viewing experiences to the user. The head-mounted display apparatus needs no additional equipment and connection cables, bringing a good portability and convenience.

Other embodiments may become apparent in view of the following descriptions and the attached drawings.

### BRIEF DESCRIPTION OF THE DRAWINGS

To more clearly illustrate some of the embodiments, the following is a brief description of the drawings. The drawings in the following descriptions are only illustrative of some embodiments. For those of ordinary skill in the art, other drawings of other embodiments can become apparent based on these drawings.
FIG. 1 is a schematic diagram of a side view of a head-mounted display apparatus according to some embodiments of the present disclosure;
FIG. 2 is a schematic diagram of a bottom view of the head-mounted display apparatus according to some embodiments of the present disclosure; and
FIG. 3 illustrates a manner wherein a user wearing the head-mounted display apparatus views external images from an external environment according to some embodiments of the present disclosure.

### DETAILED DESCRIPTION

At present, for most of the conventional immersive devices, under situations where a stimulation from the environment requires users to observe the external images, the users typically have to push aside the supports of the immersive devices or to put off the immersive device away from their heads, to thereby release their eyes to allow observing the situations in the surrounding environment. Such an inconvenience reduces the user experience.

To address the above issues associated with conventional immersive devices, the present disclosure provides a head-mounted display apparatus. The head-mounted display apparatus includes an audio playing assembly, an image displaying assembly, and an external image monitoring assembly.

The audio displaying assembly is disposed to contact with, and configured to provide audios to, ears of a user wearing the head-mounted display apparatus. The image displaying assembly is disposed to cover, and configured to provide images to, eyes of the user. The external image monitoring assembly is configured to allow the user to see external images from an environment without moving the image display assembly away from the eyes of the user.

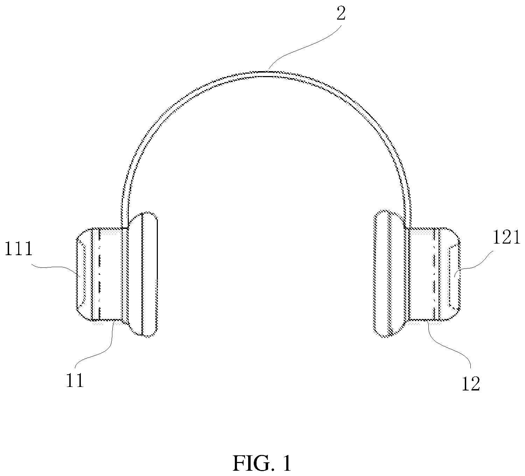

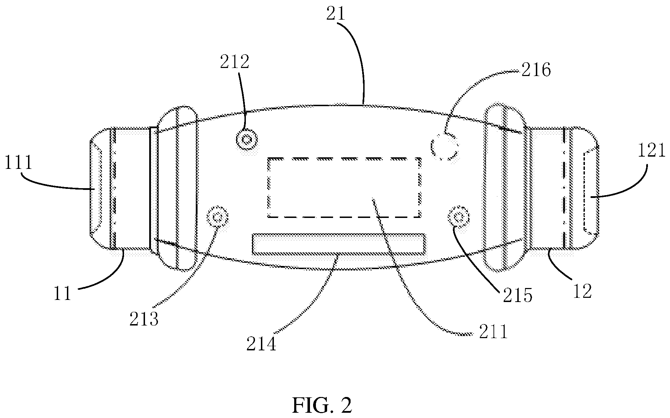

Ahead-mounted display apparatus according to some embodiment of the present disclosure is illustrated in FIG. 1 and FIG. 2. As shown in the figures, an audio displaying assembly of the head-mounted display apparatus comprises a first earcup 11 and a second earcup 12, which are disposed to respectively contact with a left ear and a right ear of a user. The audio displaying assembly can comprise an audio playing portion, which can be arranged in the first earcup 11 and/or the second earcup 12.

The first earcup 11 and the second earcup 12 are connected via a connecting member 2 disposed therebetween. The connecting member 2 is configured to be rotatably connected to the first earcup 11 and the second earcup 12 respectively. An image displaying assembly 21 is arranged on the connecting member 2, which can comprise an image playback portion and an image display region 211.

In the head-mounted display apparatus as described above, the connecting member 2 is rotatably connected to the first earcup 11 and the second earcup 12, such that when the user is wearing the head-mounted display apparatus with the first earcup 11 and the second earcup 12 mounted on the left and right ears of the user, the connecting member 2, and the image displaying assembly 21 disposed thereon can be pulled down to be disposed in front of the eyes of the user and can also be pushed upward to be disposed on top of the head of the user.

Additionally, the connecting member 2 can also be designed to be retractable so as to adapt to various different sizes or shapes of the head and face of the user. The image displaying assembly 21 can be designed as non-transparent.

When the user wants to enjoy the audios alone without viewing the images, the connecting member 2 (along with the image displaying assembly 21) can be raised, or pushed up, to the top of the head, and the user can enjoy the audios as if a traditional headphone is worn. When the user wants to enjoy images or videos, the connecting member 2 (along with the image displaying assembly 21) can be lowered, or pulled down, to a position that is roughly at the level of the eyes to allow the user to watch the images or videos played by the image displaying assembly 21.

Compared with conventional immersive devices, the head-mounted display apparatus disclosed herein has the functionality that allows a user to observe external images while wearing the apparatus 21 and watching images or videos.

It should be noted that the audio playing portion of the audio displaying assembly and the image playback portion of the image displaying assembly are not shown in FIG. 1 and FIG. 2. This is because the audio playing portion and the image playback portion are designed as functional modules, which can be invisibly arranged inside the display apparatus so as to improve the wearability and portability of the head-mounted display apparatus,.

For example, the audio playing portion can be integrated inside one or both of the first earcup 11 and the second earcup 12. If the portability in practical applications is not an issue, the audio playing portion can also be configured outside the first earcup 11 and/or the second earcup 12. However, this configuration would bring inconveneince to the user because it takes a space. Similarily, the image playback portion can be integrated inside or outside the image displaying assembly 21. There are no limitations herein.

Although the configuration of these above two functional portions can be selected based on practical needs, in some embodiments of the present disclosure, these two functional portions are preferably configured inside the head-mounted display apparatus,.

In addition, in some embodiments of the present disclosure, because the structure of an external image monitoring assembly does not need to be fixed onto the connecting member 2, there can be various ways for designing it, and it is thus not marked in FIG. 1 and FIG. 2. Based on the same consideration, some of the assemblies/members/portions/parts in the description below are also not marked in accompany drawings.

In some embodiments, the head-mounted display apparatus can further comprise a control assembly, comprising a processor (not shown) and a user interface (not shown). The user interface can be disposed on an outer side of the first earcup 11 and/or the second earcup 12, and is configured to receive a first control instruction from the user and then to send the first control instruction to the processor. Upon receiving the first control instruction from the user interface, the processor is configured to send a first control operation to the audio displaying assembly and the image displaying assembly to thereby control a play of the audios and/or the images by the head-mounted display apparatus.

In other words, in order for the user to operate the head-mounted display apparatus conveniently, a user interface can be provided to the user. By operating on the user interface, the first control instructions for the audio data and/or the image date can be sent to the processor of the display apparatus. For example, for the process in which the user selects the image data to be viewed, the user can directly carry out operations including search, selection, and play via the user interface.

In practical applications, the user interface can be a keyboard or a touchscreen display. During control using the user interface as such, the user does not need to wear the diplay apparatus over the head to be able to operate the programs or select specific functions, as long as the user can operate the user interface to send first control instructions to control the head-mounted display apparatus. There are no limitations herein.

In some embodiments, the user interface can be configured to be retracted inside, and extendable from, at least one of a first groove 111 and a second groove 121, respectively arranged on an outer side of the the first earcup 11 and the second earcup 12. This can be realized via a connection rod.

When no operation is needed, the user interface can be wholly contained inside the first groove 111 and/or the second groove 121, and when a user operation is needed to be performed, the user interface can be extended.

In a preferred embodiment of the present disclosure, the user interface can be a touchscreen display, which can be be retracted or expanded, and is configured to display an operating interface to the user and to receive the first control instruction. In one example, the user interface can be a circular touchscreen display, disposed on an outer side of one of the earcups and configured to be directly pre-programmable, which allows for direct wearing and viewing, bringing about more convenience for the user to operate.

In some embodiments, the touchscreen display can be designed additionally to comprise a mirror, which can be a reflective surface arranged on the touchscreen display and capable of reflecting external images to the user.

In one example, when the user operates, the touchscreen display is in a display state to provide an operating interface to the user; and when the user completes the operation, the touchscreen display can be set in a non-display state for power saving and can be extended and adjusted to a suitable angle to function as a reflective mirror, thereby allowing the user to monitor external images from the environment. As such, the reflective surface of the touchscreen display essentially serves a role as the external image monitoring assembly as described above.

When the user is viewing images with the head-mounted display apparatus, their eyes need to be focused in the image display region 211 of the image displaying assembly 21; and when needed, the user can view the external images reflected by the mirror surface of the touchscreen display using their peripheral vision or by adjusting the image displaying assembly 21 towards a certain angle.

In order for the user's eyesight to reach the mirror surface of the touchscreen display, in some embodiments of the present disclosure, an opening can be arranged on the image displaying assembly 21 or on other part of the connecting member 2, or alternatively a transparent or semi-transparent window can be arranged on the image displaying assembly 21 or the connecting member 2, to thereby allow simuteneous viewing of the images that are being played and the external images from the environment.

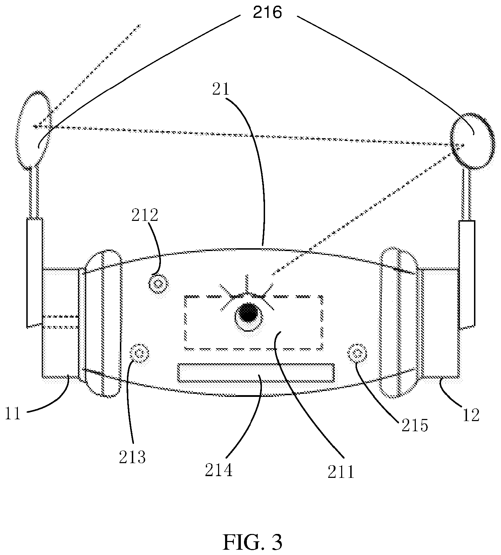

FIG. 3 is a schematic diagram of a head-mounted display apparatus-wearing user viewing external realview images according to some embodiments of the present disclosure. The touchscreen display 216 can be extended from the earcups at both sides and adjusted to a position that is a little higher than the position of the eyes of the user.

When the mirror surface of the touchscreen display 216 at both sides are arranged to turn to a certain angle in front of the user, the mirror surface of the touchscreen display 216 at one side can reflect the external images to the mirror surface of the touchscreen display 216 at the other side, then the images are reflected into the eyes of the user.

Alternatively, the mirror surface of the touchscreen displays 216 can be used as rearview mirrors: when viewing the images, the user only needs to push the two touchscreen displays apart a little or glance the mirror surface of the touchscreen displays from peripheral visions, such that external images from the environment) can be seen without affecting the viewing experience of the user.

By means of this design, the user can see external images from the environment without putting the device completely away from the eye regions, unlike the immersive devices provided by priort art.

In some other embodiments, the external image monitoring assembly of the display apparatus can comprise a first camera 212, disposed at the outer side of the image displaying assembly 21. When the user is wearing the display apparatus, the external image monitoring assembly controls the first camera 212 to capture the external images from the environment and display the external images on the touchscreen display or in the image display region 211.

In these embodiment, the external images can be captured by the first camera 212 in a real-time manner: when viewing external images is needed, the user can send an instruction to the external image monitoring assembly to allow a direct display of external images in the image display region 211.

For example, in one approach, while a left portion of the image display region 211 is still displaying the images that are being played, a right portion of the image display region 211 can be configured to display real-time external images.

In another approach, the user can control to display external images on the touchscreen display: while the image display region 211 still normally displays the images the user is currently viewing, the touch screen simultaneously displays the real-time external images. Thereby the user only needs to observe the external images from the touch screen using a peripheral vision, without the need to completely put away the connecting member 2 from the eye region.

For the above two approaches whereby the external image monitoring assembly is employed to provide external images to the user, these two approaches can be employed simultaneously, or only one approach is selected. If both approaches are employed simultaneously, the user can select to use one of the two approaches at will.

In some embodiments, a second camera 213 can be arranged on an inner portion of the image displaying assembly 21 corresponding to the eye regions of the user, which is configured to capture the images of the eyeballs of the user. The processor can determine location information of the eyesight of the user based on the images of the eyeballs, and can then determine a second control instruction based on the location information. There is a preset first corresponding relationship between the location information and the second control instruction, and the second control instruction instructs the processor to execute a second control operation to the audio data and/or the image data.

By this design, the processor can determine what operation the user wants to execute based on the eyeball images obtained. For example, if a front view of the user is employed as the reference direction, when the eyeball images of the user captured by the second camera 213 are images in which he eyeballs lean to the left, after obtaining the processed location information, a backward operation can be executed on the audio data and/or the image data that is currently playing.

When the eyeball images of the user captured by the second camera 213 are images in which the eyeballs lean to the right, after obtaining the processed location information, a forward operation can be executed on the audio data and/or the image data that is currently playing, etc. In other words, as long as the first corresponding relationship is preset, corresponding operations on the audio data and/or the image data can be executed based on the movement of the eyeballs of the user.

In order for the user to better view the images being played, the interior of the image displaying assembly 21 can be set in darkness, and as such, the second camera 213 can be an infrared camera. In some preferred embodiments, the number of the second camera 213 can be set to be two, and each second camera 213 corresponds to one eye region. As such, each of the two infrared cameras can capture the eyeball images of one eye respectively.

As shown in FIG. 2, two infrared cameras are arranged on an inner side of the image displaying assembly 21 (on lower positions as shown in FIG. 2). As such, the location of the eyesight of the user over the image display region 211 can be followed, to thereby allow the eyeballs to control (such as search and switch) the images that are being viewed without additional control devices.

In some embodiments, the images displaying on the image display region 211 can be virtual scenes played through a virtual display system. In some other embodiments, a real display system can be adopted, and as such, the image display region 211 can be a projection screen or a display panel. In practical applications, any one of these two technologies can be employed.

In order to improve the user viewing experience and reduce the weight of the head-mounted display apparatus, a virtual display system is preferred in the present disclosure. As such, a virtual display device and an optical enlargement assembly, can be arranged on an inner side the image displaying assembly 21. The user can interact with the virtual images through gestures, and in some embodiments, when the user touches the virtual images, the device can feedback to the user the senses of touch corresponding to those in the real world.

If the virtual display system is employed, the first camera 212 can further be configured to capture a gesture operation of the user in response to a virtual scene; and the processor can be configured to determine a third control instruction based on the gesture operation. There is a preset second corresponding relationship between the gesture operations and the third control instructions, and the third control instruction instructs the processor to execute a third control operation on the audio data and/or the image data.

For example, when a user is viewing the images being played, when a pause is desired, the user can slightly click in the air towards the virtual scene; when a fast forward is desired, the user can move his/her finger to the right direction in the air towards the virtual scene; and when a backward is desired, the user can move his/her finger to the left direction in the air towards the virtual scene. In this manner, the operation and control of the images that are currently being played by the user can be easily achieved.

In some embodiments, an audio wave generating device 214 can be disposed at an outer side of the image displaying assembly 21, an outer portion of the first earcup 11, and/or an outer portion of the second earcup 12. The audio wave generating device 214 is configured to provide audio wave cues to the user when there are audio wave scenes in the virtual scene. For example, an audio wave generator array can be configured at the lower region on the outer side of the image displaying assembly 21, the audio waves it generates can disturb the air to thereby provide a real sense of sound to the user.

In some embodiments, a vibration generating device 215 can be disposed on the image displaying assembly 21, the first earcup 11, and/or the second earcup 12, which is configured to provide vibration cues to the user when there are preset vibration scenes in the virtual scene. For example, a micro electrical motor can be disposed inside the first earcup 11, when there are scenes such as explosions in the virtual scene, the micro electrical motor can vibrate with a certain frequency to thereby provide a real sense of vibration to the user.

In some embodiments, a smell generating device 216 can be disposed on the outer side of the image displaying assembly 21, the outer portion of the first earcup 11, and/or the outer portion of the second earcup 12, which is configured to provide smell cues to the user when there are smell scenes in the virtual scene. For example, when there are scenes such as flower fragrances and chemical pollutions, a corresponding smell can be fed back to the user to stimulate the sense of smell to augment the user's feeling to the scene.

Additionally, a wireless transmission device and a power supply can be disposed inside the first earcup 11 and/or the second earcup 12. The wireless transmission device is configured to transmit the audio data and/or the image data, and the power supply is configured to provide power to all modules. The wireless transmission device can be of a Wi-Fi transmission mode, or of a Bluetooth transmission mode.

In some embodiments, a motherboard can be integrated in at least one of the above two earcups, and is configured to integrate a plurality of components such as the processor, the wireless transmission device, and the independent power supply, etc. Integration of these components in the two earcups can reduce the weight of the connecting member 2, thereby making it more comfortable for the user to wear the device.

In some embodiments of the present disclosure, the first earcup 11 and/or the second earcup can be coupled to the connecting member 2 via a cardan shaft. Through the cardan shaft, the direction of the connection can be adjusted flexibly, and this connection additionally has a multi-angle self-locking function, eliminating the concerns of slipping.

The head-mounted display apparatus as disclosed herein is different from conventional immersive devices: the external images can be provided to the users when they are viewing the audio and images; during the process of viewing the audio and images, direct stimulation and feedback can be provided to the users to enable the users to obtain a multitude of sensing experience; the device has a simple integrated structure and is easy to carry; and regardless at home or in the public places, users can enjoy the viewing and hearing experience with ease.

## Claims

1. A head-mounted display apparatus, comprising:
a first earcup (11) and a second earcup (12);
a connecting member (2) disposed between and rotatably connecting the first and second earcups such that, when the user is wearing the head-mounted display apparatus with the first earcup and the second earcup mounted on the left and right ears of the user, the connecting member can be pulled down to be disposed in front of the eyes of the user and also be pushed upward to be disposed on top of the head of the user;
an image displaying assembly (21), disposed on the connecting member (2) and comprising an image display region (211) and configured to cover, and to provide images to, eyes of a user; and
an external image monitoring assembly, comprising a means configured to allow the user to see external images from an environment when the image displaying assembly (21) is disposed in front of the eyes of the user;
**characterized in that**,
the connecting member (2) is the only connection element between the first and second earcups.

2. The head-mounted display apparatus of Claim 1, wherein the connecting member (2) is configured to be respectively mounted onto two ears of the user.

3. The head-mounted display apparatus of Claim 1, wherein the means for monitoring external images from the environment comprises a first camera (212), configured to capture the external images for display to the user.

4. The head-mounted display apparatus of Claim 3, wherein the external images captured by the first camera (212) are displayed on the image display region (211) in the image displaying assembly (21).

5. The head-mounted display apparatus of Claim 3, further comprising a first member extending from the head-mounted display apparatus, wherein:
the first member comprises a second image display region; and
the external images captured by the first camera (212) are displayed on the second image display region.

6. The head-mounted display apparatus of Claim 5, wherein the first member is adjustable, configured:
to be retracted in, and extendable from, a groove (111/121) on one of the first earcup (11) and the second earcup (12); and
to allow adjustment of positions and direction to realize a suitable display distance and a display angle thereof to the eyes of the user if extended; and
optionally, the first member comprises a touchscreen display (216), disposed in the second image display region.

7. The head-mounted display apparatus of Claim 1, further comprising a control assembly, wherein the control assembly comprises a processor, configured to execute control operations to control playing of the images upon receiving control instructions from the user.

8. The head-mounted display apparatus of Claim 7, wherein the control assembly further comprises a user interface, configured to provide an operating interface to receive a first control instruction from the user and to send the first control instruction to the processor; and
preferably, the user interface is at least one of a keyboard and a touchscreen display.

9. The head-mounted display apparatus of Claim 7, wherein the control assembly further comprises at least one second camera (213), wherein:
the at least one second camera (213) is disposed on an inner side of the image displaying assembly (21) and is configured to capture, and send to the processor, images of at least one eyeball of the user; and
the processor is configured to determine a second control instruction based on the images of the at least one eyeball of the user and to execute a second operation to control playing of the images; and
preferably, the at least one second camera (213) comprises two cameras, disposed to align with, and corresponding respectively to, two eyeballs of the user.

10. The head-mounted display apparatus of Claim 7, wherein the control assembly further comprises a third camera, wherein:
the third camera is configured to capture, and send to the processor, a gesture operation of the user; and
the processor is configured to determine a third control instruction based on the gesture operation of the user and to execute a third control operation to control playing of the images.

11. The head-mounted display apparatus of Claim 2, further comprising an audio playing assembly, disposed in at least one of the first earcup (11) and the second earcup (12) and configured to provide audios to ears of the user.

12. The head-mounted display apparatus of Claim 11, further comprising at least one function device (214, 215, 216), configured to provide at least one of audio wave cues, vibration cues, or smell cues corresponding to preset scenes when playing the images and the audios; and
optionally, further comprising a wireless transmission device, disposed in at least one of the first earcup (11) and the second earcup (12), and configured to transmit the images and the audios to and/or from the head-mounted display apparatus.

13. The head-mounted display apparatus of Claim 2, wherein
the first earcup (11) and the second earcup (12) are each connected to the connecting member (2) via a cardan shaft.

## Patentansprüche

1. Kopfmontierte Anzeigevorrichtung, aufweisend:
eine erste Hörmuschel (11) und eine zweite Hörmuschel (12);
ein Verbindungselement (2), das zwischen der ersten und der zweiten Hörmuschel angeordnet ist und sie drehbar miteinander verbindet, so dass, wenn der Benutzer die kopfmontierte Anzeigevorrichtung trägt, wobei die erste Hörmuschel und die zweite Hörmuschel an dem linken und rechten Ohr des Benutzers angebracht sind, das Verbindungselement nach unten gezogen werden kann, um vor den Augen des Benutzers angeordnet zu werden, und auch nach oben geschoben werden kann, um oben auf dem Kopf des Benutzers angeordnet zu werden;
eine Bildanzeigeanordnung (21), die an dem Verbindungselement (2) angeordnet ist und einen Bildanzeigebereich (211) aufweist und konfiguriert ist, um die Augen eines Benutzers abzudecken und für sie Bilder vorzusehen; und
eine externe Bildüberwachungsanordnung, die ein Mittel aufweist, das konfiguriert ist, um dem Benutzer zu ermöglichen, externe Bilder aus einer Umgebung zu sehen, wenn die Bildanzeigeanordnung (21) vor den Augen des Benutzers angeordnet ist;
**dadurch gekennzeichnet, dass**
das Verbindungselement (2) das einzige Verbindungselement zwischen der ersten und der zweiten Hörmuschel ist.

2. Kopfmontierte Anzeigevorrichtung nach Anspruch 1, wobei das Verbindungselement (2) konfiguriert ist, um jeweils an den beiden Ohren des Benutzers angebracht zu werden.

3. Kopfmontierte Anzeigevorrichtung nach Anspruch 1, wobei das Mittel zur Überwachung externer Bilder aus der Umgebung eine erste Kamera (212) aufweist, die konfiguriert ist, um die externen Bilder zur Anzeige für den Benutzer aufzunehmen.

4. Kopfmontierte Anzeigevorrichtung nach Anspruch 3, wobei die externen Bilder, die von der ersten Kamera (212) aufgenommen werden, auf dem Bildanzeigebereich (211) in der Bildanzeigeanordnung (21) angezeigt werden.

5. Kopfmontierte Anzeigevorrichtung nach Anspruch 3, ferner ein erstes Element aufweisend, das sich von der kopfmontierten Anzeigevorrichtung aus erstreckt, wobei
das erste Element einen zweiten Bildanzeigebereich aufweist; und
die externen Bilder, die von der ersten Kamera (212) aufgenommen werden, in dem zweiten Bildanzeigebereich angezeigt werden.

6. Kopfmontierte Anzeigevorrichtung nach Anspruch 5, wobei das erste Element einstellbar ist, konfiguriert um:
in eine Nut (111/121) an einer der ersten Hörmuschel (11) und der zweiten Hörmuschel (12) eingezogen und aus dieser ausgefahren zu werden; und
eine Einstellung von Positionen und einer Richtung zu ermöglichen, um einen geeigneten Anzeigeabstand und einen Anzeigewinkel davon zu den Augen des Benutzers zu realisieren, wenn es ausgefahren ist; und
optional das erste Element eine Touchscreen-Anzeige (216) aufweist, die in dem zweiten Bildanzeigebereich angeordnet ist.

7. Kopfmontierte Anzeigevorrichtung nach Anspruch 1, ferner eine Steueranordnung aufweisend, wobei die Steueranordnung einen Prozessor aufweist, der konfiguriert ist, um Steuervorgänge auszuführen, um eine Wiedergabe der Bilder nach dem Empfang von Steueranweisungen von dem Benutzer zu steuern.

8. Kopfmontierte Anzeigevorrichtung nach Anspruch 7, wobei die Steueranordnung ferner eine Benutzerschnittstelle aufweist, die konfiguriert ist, um eine Betriebsschnittstelle vorzusehen, um eine erste Steueranweisung von dem Benutzer zu empfangen und die erste Steueranweisung an den Prozessor zu senden; und
vorzugsweise die Benutzerschnittstelle mindestens eines von einer Tastatur und einer Touchscreen-Anzeige ist.

9. Kopfmontierte Anzeigevorrichtung nach Anspruch 7, wobei die Steueranordnung ferner mindestens eine zweite Kamera (213) aufweist, wobei:
die mindestens eine zweite Kamera (213) an einer Innenseite der Bildanzeigeanordnung (21) angeordnet ist und konfiguriert ist, um Bilder von mindestens einem Augapfel des Benutzers aufzunehmen und an den Prozessor zu senden; und
der Prozessor konfiguriert ist, um eine zweite Steueranweisung auf der Grundlage der Bilder des mindestens einen Augapfels des Benutzers zu bestimmen und einen zweiten Vorgang auszuführen, um eine Wiedergabe der Bilder zu steuern; und
vorzugsweise die mindestens eine zweite Kamera (213) zwei Kameras aufweist, die so angeordnet sind, dass sie mit beiden Augäpfeln des Benutzers ausgerichtet sind und ihnen jeweils entsprechen.

10. Kopfmontierte Anzeigevorrichtung nach Anspruch 7, wobei die Steueranordnung ferner eine dritte Kamera aufweist, wobei:
die dritte Kamera konfiguriert ist, um einen Gestenvorgang des Benutzers aufzunehmen und an den Prozessor zu senden; und
der Prozessor konfiguriert ist, um eine dritte Steueranweisung auf der Grundlage des Gestenvorgangs des Benutzers zu bestimmen und einen dritten Steuervorgang auszuführen, um die Wiedergabe der Bilder zu steuern.

11. Kopfmontierte Anzeigevorrichtung nach Anspruch 2, ferner eine Audiowiedergabeanordnung aufweisend, die in mindestens einer der ersten Hörmuschel (11) und der zweiten Hörmuschel (12) angeordnet und konfiguriert ist, um für die Ohren des Benutzers Audios vorzusehen.

12. Kopfmontierte Anzeigevorrichtung nach Anspruch 11, ferner mindestens eine Funktionsvorrichtung (214, 215, 216) aufweisend, die konfiguriert ist, um bei Wiedergabe der Bilder und Audios mindestens eines von Audiowellen-Hinweisen, Vibrations-Hinweisen oder Geruchs-Hinweisen vorzusehen, die voreingestellten Szenen entsprechen; und
optional ferner eine drahtlose Übertragungsvorrichtung, die in mindestens einer der ersten Hörmuschel (11) und der zweiten Hörmuschel (12) angeordnet ist und konfiguriert ist, um die Bilder und die Audios zu und/oder von der kopfmontierten Anzeigevorrichtung zu übertragen.

13. Kopfmontierte Anzeigevorrichtung nach Anspruch 2, wobei die erste Hörmuschel (11) und die zweite Hörmuschel (12) jeweils mit dem Verbindungsglied (2) über eine Kardanwelle verbunden sind.

## Revendications

1. Visiocasque, comprenant :
une première oreillette (11) et une seconde oreillette (12) ;
un élément de liaison (2) disposé entre et connectant de manière rotative les première et seconde oreillettes de sorte que, lorsque l'utilisateur porte le visiocasque avec la première oreillette et la seconde oreillette montées sur les oreilles gauche et droite de l'utilisateur, l'élément de liaison peut être tiré vers le bas pour être disposé devant les yeux de l'utilisateur et également être poussé vers le haut pour être disposé au-dessus de la tête de l'utilisateur ;
un ensemble d'affichage d'image (21), disposé sur l'élément de liaison (2) et comprenant une région d'affichage d'image (211) et configuré pour couvrir, et fournir des images aux yeux d'un utilisateur ; et
un ensemble de surveillance d'image externe, comprenant un moyen configuré pour permettre à l'utilisateur de voir des images externes à partir d'un environnement lorsque l'ensemble d'affichage d'image (21) est disposé devant les yeux de l'utilisateur ;
**caractérisé en ce que**,
l'élément de liaison (2) est le seul élément de liaison entre les première et seconde oreillettes.

2. Visiocasque selon la revendication 1, dans lequel l'élément de liaison (2) est configuré pour être monté respectivement sur deux oreilles de l'utilisateur.

3. Visiocasque selon la revendication 1, dans lequel les moyens pour surveiller des images externes de l'environnement comprennent une première caméra (212), configurée pour capturer les images externes à afficher à l'utilisateur.

4. Visiocasque selon la revendication 3, dans lequel les images externes capturées par la première caméra (212) sont affichées sur la région d'affichage d'image (211) dans l'ensemble d'affichage d'image (21).

5. Visiocasque selon la revendication 3, comprenant en outre un premier élément s'étendant depuis le visiocasque, dans lequel :
le premier élément comprend une seconde région d'affichage d'image ; et
les images externes capturées par la première caméra (212) sont affichées sur la seconde région d'affichage d'image.

6. Visiocasque selon la revendication 5, dans lequel le premier élément est réglable, configuré :
pour être rétracté dans, et extensible à partir d'une rainure (111/121) sur une oreillette parmi la première oreillette (11) et la seconde oreillette (12) ; et
pour permettre un ajustement des positions et de la direction pour réaliser une distance pour un affichage et un angle d'affichage appropriés de celui-ci aux yeux de l'utilisateur s'il est étendu ; et
de manière optionnelle, le premier élément comprend un affichage à écran tactile (216), disposé dans la seconde région d'affichage d'image.

7. Visiocasque selon la revendication 1, comprenant en outre un ensemble de commande, dans lequel l'ensemble de commande comprend un processeur, configuré pour exécuter des opérations de commande pour commander la lecture des images lors de la réception d'instructions de commande provenant de l'utilisateur.

8. Visiocasque selon la revendication 7, dans lequel l'ensemble de commande comprend en outre une interface utilisateur, configurée pour fournir une interface d'exploitation pour recevoir une première instruction de commande provenant de l'utilisateur et pour envoyer la première instruction de commande au processeur ; et
de préférence, l'interface utilisateur est au moins l'un des élément parmi un clavier et un écran tactile.

9. Visiocasque selon la revendication 7, dans lequel l'ensemble de commande comprend en outre au moins une deuxième caméra (213), dans lequel :
lesdites au moins une deuxième caméra (213) sont disposées sur un côté intérieur de l'ensemble d'affichage d'image (21) et sont configurées pour capturer et envoyer au processeur des images d'au moins un globe oculaire de l'utilisateur ; et
le processeur est configuré pour déterminer une deuxième instruction de commande basée sur les images desdits au moins un globe oculaire de l'utilisateur et pour exécuter une deuxième opération pour commander la lecture des images ; et
de préférence, lesdites au moins une deuxième caméra (213) comprennent deux caméras, disposées pour s'aligner avec, et correspondant respectivement à, deux globes oculaires de l'utilisateur.

10. Visiocasque selon la revendication 7, dans lequel l'ensemble de commande comprend en outre une troisième caméra, dans lequel :
la troisième caméra est configurée pour capturer, et envoyer au processeur, une opération gestuelle de l'utilisateur ; et le processeur est configuré pour déterminer une troisième instruction de commande basée sur l'opération gestuelle de l'utilisateur et pour exécuter une troisième opération de commande pour commander la lecture des images.

11. Visiocasque selon la revendication 2, comprenant en outre un ensemble de lecture audio, disposé dans au moins une oreillette parmi la première oreillette (11) et la seconde oreillette (12) et configuré pour fournir des sons aux oreilles de l'utilisateur.

12. Visiocasque selon la revendication 11, comprenant en outre au moins un dispositif de fonction (214, 215, 216), configuré pour fournir au moins un signal parmi des signaux d'onde audio, des signaux de vibration ou des signaux d'odeur correspondant à des scènes prédéfinies lors de la lecture des images et des sons ;
et
de manière optionnelle, comprenant en outre un dispositif de transmission sans fil, disposé dans au moins une oreillette parmi la première oreillette (11) et la seconde oreillette (12), et configuré pour transmettre les images et les sons vers et/ou depuis le visiocasque.

13. Visiocasque selon la revendication 2, dans lequel la première oreillette (11) et la seconde oreillette (12) sont chacune reliées à l'élément de liaison (2) via un arbre à cardan.
